Europäisches Patentamt

(19) **European Patent Office**

**Office européen des brevets**

(11) Numéro de publication : **0 069 630**
**B1**

(12) # FASCICULE DE BREVET EUROPÉEN

(45) Date de publication du fascicule du brevet :
07.05.86

(21) Numéro de dépôt : **82401159.7**

(22) Date de dépôt : **24.06.82**

(51) Int. Cl.⁴ : **H 02 K 41/03**, G 21 C   7/12,
H 02 K 37/00, H 02 K   5/128

(54) **Moteur électrique à réluctance variable pour la translation des barres de commande dans un réacteur nucléaire.**

(30) Priorité : 08.07.81 FR 8113448
30.04.82 FR 8207540
27.05.82 FR 8209303

(43) Date de publication de la demande :
**12.01.83 Bulletin 83/02**

(45) Mention de la délivrance du brevet :
**07.05.86 Bulletin 86/19**

(84) Etats contractants désignés :
**BE CH DE FR GB IT LI NL SE**

(56) Documents cités :
**DE-A- 1 514 614**
**DE-B- 1 488 500**
**FR-A-   879 428**
**FR-A- 1 337 222**
**FR-A- 1 345 470**
**FR-A- 1 592 065**
**FR-A- 2 154 853**
**GB-A-   485 225**
**US-A- 3 068 371**
**US-A- 3 292 065**

(73) Titulaire : **JEUMONT-SCHNEIDER Société anonyme
dite:**
**31-32, Quai de Dion Bouton**
**F-92811 Puteaux Cedex (FR)**

(72) Inventeur : **Wiart, Albert**
**20, rue de la république**
**F-95110 Sannois (FR)**
Inventeur : **Defaucheux, Jacques**
**Résidence Claude Bernard Rue Laennec**
**F-59460 Jeumont (FR)**
Inventeur : **Guedj, Freddy**
**Résidence Joffre**
**F-59460 Jeumont (FR)**

(74) Mandataire : **Lejet, Christian**
**Société JEUMONT-SCHNEIDER 31-32, Quai de Dion
Bouton**
**F-92811 Puteaux Cedex (FR)**

## Description

La présente invention concerne un moteur électrique à réluctance variable et à flux transversal, notamment destiné à assurer la translation des barres de commande à l'intérieur d'une enceinte sous pression dans un réacteur nucléaire, éventuellement après conversion d'un mouvement de rotation en un mouvement de translation au moyen d'un système de type vis-écrou. On sait qu'en réglant l'immersion, dans le cœur d'un réacteur nucléaire, de barres ayant la propriété d'absorber des neutrons, par exemple des barres en carbure de bore, la puissance développée par le réacteur peut être aisément commandée. Dans ce but, les barres sont généralement solidaires d'une tige mobile se déplaçant dans une chemise étanche fixée au réacteur, chemise dans laquelle règnent des conditions de température et de pression identiques à celles qui règnent dans la cuve du réacteur.

Selon le brevet FR-A-1 371 802, un élément de transfert de charge mécanique pourvu de mâchoires à trois positions et commandées à l'aide de solénoïdes, est mis en œuvre pour imprimer un mouvement de translation à la barre. Ce dispositif, fonctionnant à la manière d'un électro-aimant, présente l'inconvénient d'imprimer un mouvement brusque à ses éléments mobiles. Il en résulte la nécessité de disposer localement des amortisseurs ou tampons comme par exemple décrits dans le brevet BE-A-753 529. Toutefois, malgré la présence de tels amortisseurs, les mécanismes des mâchoires subissent de fortes contraintes génératrices d'usure.

Pour obvier à cet inconvénient, il a été proposé par exemple dans le brevet FR-A-1 455 472 d'utiliser un moteur électromagnétique dont l'élément mobile est constitué par la tige elle-même qui porte alors des saillies annulaires disposées de manière à réaliser un moteur à réluctance variable de type vernier, engendrant un mouvement de translation exempt de tout mouvement de rotation. Toutefois, un tel moteur, qui est également décrit dans FR-A-2 154 853, n'a pas pu être valablement mis en œuvre, d'une part à cause du fait qu'il nécessite un trop grand nombre de bobines constituant la partie statorique du moteur et d'autre part, à cause d'un mauvais rendement consécutif à une saturation de la tige, due à la concentration axiale du flux magnétique.

Le brevet allemand DE-A-1 514 614 décrit également un dispositif ayant les mêmes fonctions où l'on trouve une chemise étanche. Toutefois, la forme de réalisation du moteur proprement dit est très différente puisqu'il utilise aussi un flux axial dont résultent les mêmes problèmes liés à la saturation magnétique de la tige.

La présente invention a pour objet d'obvier à ces inconvénients.

Dans ce but, l'invention concerne un moteur électrique à réluctance variable ayant sa partie rotorique disposée dans une chemise étanche, ladite partie rotorique étant constituée par une tige en matériau magnétique, munie de saillies régulièrement espacées, et une partie statorique constituée par au moins trois stators multipolaires entourant consécutivement ladite tige, chaque noyau polaire présentant des évidements, côté tige, de manière à constituer des saillies de même largeur et écartement que celles de la tige, l'espacement entre stators étant tel que les saillies de la tige et celles des noyaux polaires ne se trouvent en regard que pour l'un des stators, ledit moteur étant caractérisé en ce qu'il utilise un flux transversal, et que ladite chemise étanche est disposée en intersection du circuit magnétique statorique qui comprend les noyaux polaires et, à l'intérieur de la chemise, des pièces magnétiques prolongeant lesdits noyaux polaires.

L'invention sera mieux comprise et d'autres buts, caractéristiques et avantages apparaîtront plus clairement à la lecture de la description qui suit, à laquelle une planche de dessins est annexée, d'un mode de réalisation de l'invention.

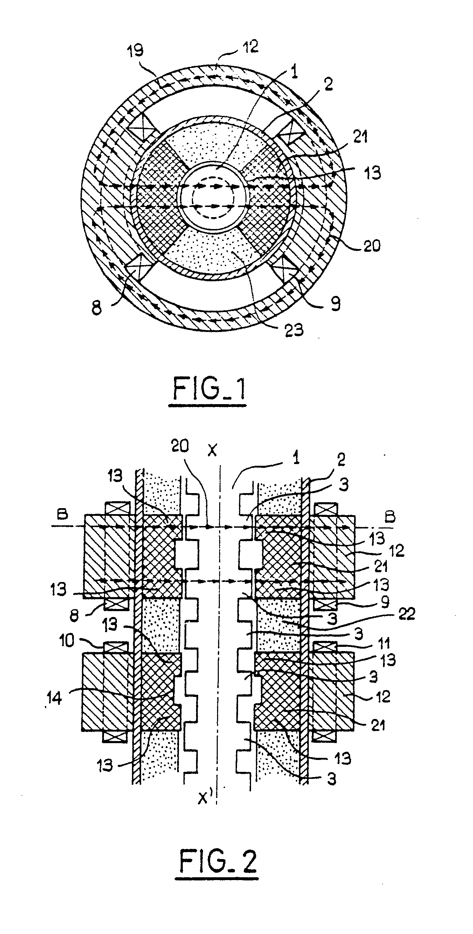

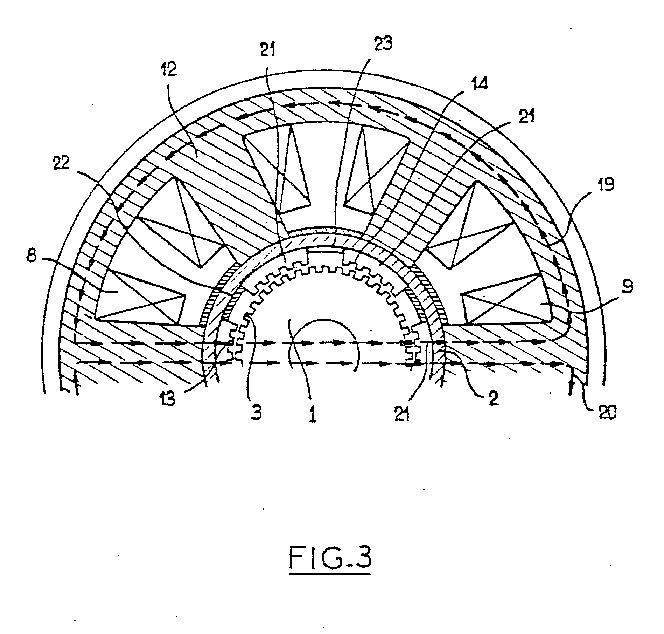

Les figures 1 et 2 représentent schématiquement un moteur électrique engendrant un mouvement de translation appliqué à la commande de barre dans un réacteur nucléaire, respectivement en coupe transversale et en coupe axiale dans le plan BB, selon un premier mode de réalisation conforme à la présente invention et, la figure 3 représente schématiquement, en demi-coupe transversale, un moteur électrique engendrant un mouvement de rotation. En référence maintenant aux figures 1 et 2, dans l'application du moteur à la translation des barres de commande d'un réacteur nucléaire, la partie rotorique du moteur, c'est-à-dire la tige 1, est disposée coaxialement dans une chemise étanche tubulaire 2. La tige 1, réalisée dans un matériau magnétique, est munie de saillies annulaires 3, régulièrement espacées le long de l'axe de la tige.

La partie statorique du moteur est constituée par un ensemble de forme générale tubulaire de même axe xx' que la tige comprenant au moins trois stators multipolaires. Ces derniers sont constitués chacun par une paire de bobines 8, 9 et 10, 11, disposées en selle autour du noyau polaire.

Une culasse magnétique 12 de forme annulaire entoure chaque paire de bobines.

La chemise étanche 2 est disposée en intersection du circuit magnétique statorique. Chaque noyau polaire qui se prolonge à l'intérieur de la chemise 2 à l'aide d'un élément magnétique 21 présente, sur sa paroi interne, des évidements annulaires 14, de manière à constituer des saillies 13 en forme de secteur, dans chaque fenêtre ménagée par les bobines, et disposées dans des plans transversaux différents, ces saillies 13 étant de même largeur et de même écartement que les saillies annulaires 3 dont est pourvue la tige 1.

De façon à réaliser une structure du type vernier, les stators multipolaires consécutifs sont espacés le long de l'axe xx' du moteur, de telle manière que les saillies annulaires 3 de la tige 1 ne se trouvent en regard que des saillies 13 du noyau polaire de l'un seulement des stators, comme représenté sur les figures. Ainsi, en prenant l'exemple représenté, la paire de bobines 8, 9 étant alimentée, la tige mobile 1 se positionne de telle façon que la réluctance opposée au flux magnétique soit minimale. Ceci se produit lorsque les saillies annulaires 3 de la tige 1 sont précisément en regard des saillies correspondantes 13 du noyau polaire correspondant. Il faut noter que sur la figure, seules deux paires de bobines ont été représentées bien qu'il en faille trois pour assurer un mouvement bidirectionnel.

Le flux engendré se referme selon un trajet transversal, c'est-à-dire perpendiculaire à l'axe xx' de la tige 1, comme représenté par les fléchettes 19 et 20. Par la suite, cette tige ne subit aucune saturation magnétique axiale. Pour déplacer la tige, par exemple d'un mouvement ascendant, il suffit de couper l'alimentation de la paire de bobine 8, 9 et d'alimenter la paire de bobines 10, 11. A ce moment-là, le champ magnétique engendre une force de direction axiale tendant à positionner la tige, de telle manière que la réluctance s'opposant au flux magnétique soit minimale. Les saillies annulaires 3 de la tige magnétique 1 vont, de ce fait, se positionner en regard des saillies 13 du noyau polaire correspondant aux bobines 10 et 11.

De façon à assurer un bon positionnement de ces éléments magnétiques 21 et, également, à servir de guide pour la tige 1, des bourrages en matériau amagnétique 22 et 23 sont prévus à l'intérieur de la chemise étanche 2, entre les éléments magnétiques 21 des différents noyaux polaires. Ainsi, l'entrefer actif, c'est-à-dire entre les saillies annulaires 3 de la tige 1 et les saillies 13 des noyaux polaires, est réduit, tandis qu'un entrefer parasite dû à la présence de la chemise étanche 2, si celle-ci est réalisée dans un matériau amagnétique, est créé dans le circuit magnétique statorique. Cependant, cet entrefer parasite est créé entre deux pièces magnétiques fixes disposées face à face, et par suite, la dispersion du flux magnétique dans cet entrefer est très réduite. Si la chemise est réalisée dans un matériau magnétique, il subsiste une faible dispersion du flux magnétique entre les saillies annulaires, dispersion n'affectant pas le bon fonctionnement du moteur. En outre, les surfaces des pièces magnétiques en regard sont maximales et il en résulte un rendement magnétique optimal. Selon un mode préféré de réalisation de l'invention, les saillies annulaires 13 sont moins hautes que les évidements correspondants 14 et le rapport de leurs longueurs respectives est égal à 3/5. La profondeur de chaque évidement 14 est trois fois plus grande que la largeur de l'entrefer actif.

Dans un exemple de réalisation, l'enceinte étanche 2, en acier inoxydable, avait une épaisseur de 10 mm et un diamètre extérieur de 100 mm. La largeur de l'entrefer actif était de 1 mm environ. Les dents avaient un pas de 8 mm, les évidements une profondeur de 3 mm. Avec une tige magnétique 1 de 78 mm de diamètre, les bobines inductrices de 468 spires chacune avec un noyau principal de 230 mm de hauteur de 110 mm de largeur, la force atteinte a été égale à 3 000 newtons pour un courant de 27 ampères.

En référence maintenant à la figure 3, le moteur représenté engendre un mouvement de rotation à très basse vitesse et très fort couple moteur. En outre, on peut lui donner un grand nombre de positions possibles par tour. Dans son application à la commande de la translation d'une barre, il faut lui adjoindre un système de type vis-écrou bien connu et qui ne sera pas décrit ici. Le fonctionnement et les parties constructives de ce moteur étant identiques à ceux décrits précédemment, les références indiquées sur la figure 3 sont les mêmes que celles utilisées dans les autres figures, bien que les saillies 3 et 13, au lieu d'être annulaires soient longitudinales.

On notera que la chemise 2, qui assure l'étanchéité vis-à-vis du fluide primaire, peut être réalisée aussi bien dans un matériau amagnétique que dans un matériau magnétique, par exemple inoxydable. Avec une chemise mince, les efforts de pression exercés sur celle-ci sont repris par la structure même de la partie statorique.

Il est évident que, pour obtenir une plus grande précision du positionnement de la tige, il est préférable de mettre en œuvre plus de trois stators multipolaires puisque leur nombre n'est pas limité par une éventuelle saturation magnétique axiale de la tige, le trajet du flux magnétique ne prenant jamais une direction parallèle à l'axe dans la tige.

Toutefois, on peut également augmenter la précision du mouvement et la force nominale transmise avec un moteur à trois stators en alimentant successivement un premier stator, puis un premier et un deuxième stators, puis le deuxième seul, puis le deuxième et le troisième simultanément, puis le troisième seul, puis le troisième et le premier simultanément, et ainsi de suite. Quand deux stators sont alimentés simultanément, l'intensité du courant peut être réduite en gardant une position stable, ce qui amène une réduction de la consommation électrique.

## Revendications

1. Moteur électrique à réluctance variable ayant sa partie rotorique disposée dans une chemise étanche, ladite partie rotorique étant constituée par une tige (1) en matériau magnétique munie de saillies (3) régulièrement espacées, et une partie statorique constituée par au moins trois stators multipolaires entourant consécutivement ladite tige, chaque noyau polaire présentant, côté tige, des évidements (14), de manière à constituer des saillies (13) de même largeur et écartement que celles de la tige, l'espacement entre stators étant tel que les saillies de la tige et celles des noyaux polaires ne se trouvent en regard que pour l'un des stators, ledit moteur étant caractérisé en ce qu'il utilise un flux transversal et que ladite chemise étanche (2) est disposée en intersection du circuit magnétique statorique qui comprend lesdits noyaux polaires et, à l'intérieur de ladite chemise (2), des pièces magnétiques (21) prolongeant lesdits noyaux polaires.

2. Moteur selon la revendication 1, caractérisé en ce que ladite chemise étanche (2) est réalisée aussi bien dans un matériau amagnétique que dans un matériau magnétique.

**Claims**

1. Variable-reluctance electric motor having its rotor part arranged in a sealing-tight casing, the said rotor part being constituted by a rod (1) made of magnetic material and provided with uniformly spaced projections (3), and a stator part constituted by at least three multipole stators surrounding the said rod consecutively, each pole core comprising, adjacent to the rod, recesses (14) such as to form projections (13) of the same width and spacing as those of the rod, the spacing between stators being such that the projections of the rod and the projections of the pole cores are situated oppositely only in the case of one of the stators, the said motor being characterised in that it uses a transverse flux, and that the said sealing-tight casing (2) is situated in an intersection position with respect to the stator magnetic circuit which comprises the said pole cores and, within the said casing (2), magnetic pieces (21) prolonging the said pole cores.

2. Motor according to claim 1, characterised in that the said sealing-tight casing (2) is made both from a non-magnetic material and a magnetic material.

**Patentansprüche**

1. Elektromotor mit variabler Reluktanz, dessen Rotorteil in einem dichten Mantel angeordnet ist, wobei der genannte Rotorteil gebildet ist aus einer Stange (1) aus magnetischem Material, die mit regelmäßig beabstandeten Vorsprüngen (3) versehen ist, und mit einem Statorteil, welcher durch wenigstens drei vielpolige Statoren gebildet ist, die aufeinanderfolgend die genannte Stange umgeben, wobei jeder Polkern auf der Seite der Stange Ausnehmungen (14) aufweist, um Vorsprünge (13) von gleicher Breite und gleichem Abstand wie die der Stange zu bilden, wobei der Abstand zwischen den Statoren derart ist, daß die Vorsprünge der Stange und die der Polkerne nur bei einem der Statoren einander gegenüberliegen, wobei der genannte Motor dadurch gekennzeichnet ist, daß er einen Querfluß ausnutzt, und daß der genannte dichte Mantel (2) den Statormagnetkreis schneidend angeordnet ist, welcher die genannten Polkerne sowie im Inneren des genannten Mantels (2) Magnetteile (21) enthält, welche die genannten Polkerne verlängern.

2. Motor nach Anspruch 1, dadurch gekennzeichnet, daß der genannte dichte Mantel (2) beliebig aus einem unmagnetischen oder aus einem magnetischen Material gebildet ist.

## FIG_1

## FIG_2

FIG.3